# EUROPEAN PATENT APPLICATION

(11) **EP 0 886 125 A2**
(43) Date of publication of application: **23.12.1998**
(21) Application number: 98111357.4
(22) Date of filing: 19.06.1998
(51) Int. Cl.: G01C 21/20

(54) **Display device for a vehicle**

(30) Priority: 20.06.1997 JP 180399/97
(71) Applicant: YAMAHA HATSUDOKI KABUSHIKI KAISHA, Iwata-shi Shizuoka-ken, 438 (JP)
(72) Inventor: Nakai, Noboru, Iwata-Shi, Shizuoka-ken (JP)
(74) Representative: Grünecker, Kinkeldey, Stockmair & Schwanhäusser Anwaltssozietät

(57) **Abstract**

A display device for a vehicle comprises a meter for indicating vehicle speed and others to display a route guidance for driving along a predetermined route on the screen by performing a specified calculating operation on previously inputted data for different points on the route and on the detected data for a current point. A display section for navigation and a display section for meters are disposed close to each other. The display section for the meters may be partially or entirely switched to display navigation information. Accordingly, ergonomics and driving safety can be improved when using a navigation device on a vehicle. Moreover, the size of the display device can be reduced significantly so that the display device is particularly suitable for motorcycles.

## Description

This invention relates to the field of navigation devices wherein route guidance for driving along a predetermined route is displayed on a screen by performing a specified calculating operation based on previously inputted data for different points along the route and on data for a current point detected with a global positioning system (GPS) or the like. More particularly, this invention relates to a display device for a vehicle.

Lately, technical developments for different types of navigation system as guiding means for automobiles visiting unfamiliar places have been and are briskly going on. In a known automobile navigation device, for example, when starting point data and destination data are inputted, a route searching process is carried out using information on nearby roads, and an optimum route is set from among a plurality of routes. In another known device, a route guidance from the starting point to the destination is provided by performing a specified calculating operation based on previously inputted data for different points on the route and the destination, and on the data for the current position detected with the GPS or the like (For example, Japanese laid-open patent application Hei-5-265376 and Japanese laid-open patent application Hei-6-337218).

Conventionally, the navigation device on a vehicle is arranged separately from a vehicle dashboard including the meters for a vehicle speed, time, overall distance, oil temperature and the like.

In such conventional navigation devices, a relatively large display screen, for example a color CRT or a color liquid crystal display for displaying maps by using map data from a CD-ROM is integrally formed with a main part of the navigation device.

Since the conventional navigation device as described above displays all the navigation information on the display section of the device, a relatively large display screen is required for the display of route guidance information.

For vehicles having a limited amount of mounting space such as motorcycles or even bicycles, mounting of such conventional navigation devices would be difficult, and even if mounted in a limited space the display of the navigation device would not be easy to see.

Moreover, the need of a CD-ROM for the route guidance information puts further restraints on the reduction of size of the navigation device. Because of their size, conventional navigation devices in automobiles are normally mounted at a middle portion between the front seats. However, this arrangement is disadvantageous with respect to ergonomics and driving safety.

Accordingly, the object of the present invention is to improve ergonomics and driving safety when using a navigation device on a vehicle.

This technical problem is solved by a display device for a vehicle, preferably for a motorcycle, according to claim 1.

The display device comprises a first display section for navigation for displaying a route guidance along a predetermined route based on previously input data for different points on the route and detected data for a current point representing the actual position of the vehicle. The display device further comprises a second display section for meters including a meter for the vehicle speed. The first and second display sections are arranged close to each other. Accordingly, the driver of the vehicle need not turn his head for obtaining route guidance information but, as both display sections are arranged in a very narrow field of vision, the driver can read the information on the navigation display section and on the display section for the meters at the same time. Accordingly, less time is required for reading the instruments thereby increasing ergonomics and driving safety. As the display device will be very small in size, it can be used easily on motorcycles and also be integrated in a dashboard of an automobile.

Preferably, means are provided for partially or entirely switching the second display section for the meters to display navigation information. Accordingly, navigation information which is of lower importance will be kept in the background and displayed only on demand. Thus, it is possible to further reduce the size of the display device to make it particularly suitable for motorcycles.

In order to avoid a large sized CD-ROM on the display device, i.e. its navigation section, the display device is adapted to be switched to a plurality of display modes including a mode for registering the points of a preselected route. Registration may take place by transferring data prepared on a personal computer with the help of appropriate software into the display device or by entering the data by means of actuation elements provided on the housing of the display device. In any case, as no CD for storing information is required on the display device, its size can be reduced significantly.

In order to further increase driving safety, said registering mode will be active only when the vehicle is at a standstill position and a further condition confirming said standstill position is determined, for example by means of a switch actuated by the stand of a motorcycle.

Preferably, the display device further comprises means for automatically switching the display device to its drive mode when the vehicle is started so that the speed of the vehicle will always be displayed when the vehicle is driven.

According to a further preferred embodiment, the display device comprises means for activating a turning direction signal when the vehicle is close to a preselected point. The turning direction signal will be switched off when a driver finds himself between two preselected points at a large distance therefrom. Accordingly, the driver is given only the information required appropriate to the situation thereby preventing the presentation of too much information on the display device. Moreover, the switching on of the turning direction signal will increase the driver's attention that he is close to the next preselected point on the route.

Further advantageous embodiments of the invention are laid down in the further subclaims.

Further features and advantages of the invention will become apparent from the following embodiments representing examples of the invention as shown in the accompanying drawings:
FIG. 1 is a system block diagram of an example navigation device for carrying out route guidance.
FIG. 2 is a perspective view of a first embodiment of a display device in the drive mode.
FIG. 3 is a view from above of the display device in the drive mode according to FIG. 2 when the vehicle approaches a point on the route.
FIGs. 4(A), 4(B) and 4(C) are views from above of the display device in different modes; (A) in the drive mode when the vehicle is distant from a point on the route, (B) in the longitude and latitude display mode, and (C) in the mode for registering the point on the route.
FIG. 5 is an explanatory drawing showing the transition on the display screen during driving by means of the navigation device shown in FIG. 1.
FIG. 6 is a perspective view near the handlebar grip of a motorcycle provided with a button for switching the points on the route and a memory button for the navigation device shown in FIG. 1.
FIG. 7 is a side view of a motorcycle with a rider on it, showing the location of warning means of the navigation device shown in FIG. 1.
FIGs. 8(A) and 8(B) are explanatory drawings of examples of (longitude and latitude) data tables registered in a memory using a memory button of the navigation device shown in FIG. 1.
FIG. 9 is a system block diagram for making a simplified memory of a traveled route using the navigation device shown in FIG. 1.
FIGs. 10(A) and 10(B) are explanatory drawings of examples of (longitude and latitude) data tables of traveled routes stored in the memory of the system.
FIGs. 11(A) and 11(B) are an elevation and a side view respectively of two motorcycles showing an example of infrared communication between main parts of the navigation devices shown in FIG. 1 mounted on respective motorcycles (in the case the infrared input-output window is provided on the left side surface of the device).
FIGs. 12(A) and 12(B) are an elevation and a side view respectively of two motorcycles showing an example of infrared communication between main parts of the navigation devices shown in FIG. 1 mounted on respective motorcycles (in the case the infrared input-output windows are provided on both left side surfaces of the device).
FIG. 13 is a view of another embodiment of a display device (both display screens in the drive mode).
FIG. 14 is a view of a third embodiment of a display device (the display screen in the drive mode).
FIG. 15(A), 15(B) and 15(C) are views from above a main part of the device shown in FIG. 14, with the display screen being in; (A) the drive mode when the vehicle is near a point on the route, (B) the longitude and latitude display mode, and (C) the mode for registering the points on the route.

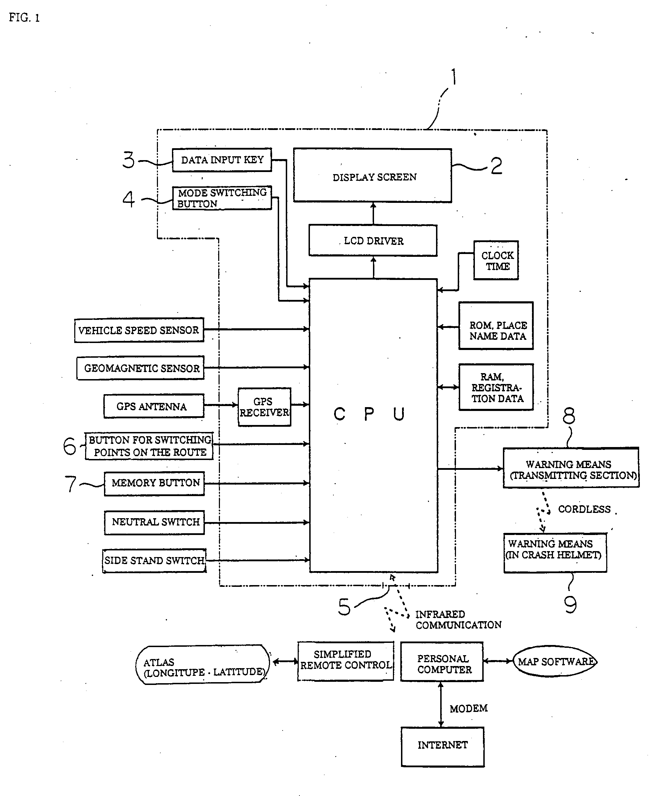

FIG. 1 shows the system constitution of an example of navigation device for motorcycles. A main part 1 of the navigation device comprises a CPU for controlling the entire system, a ROM for storing data of programs and place names for performing a specified calculating operation, a RAM for registering data of points along the route, a display screen 2 for displaying the result of the specified calculating operation in the CPU through an LCD driver, and a receiver for a global positioning system (GPS) for detecting a current position of the vehicle.

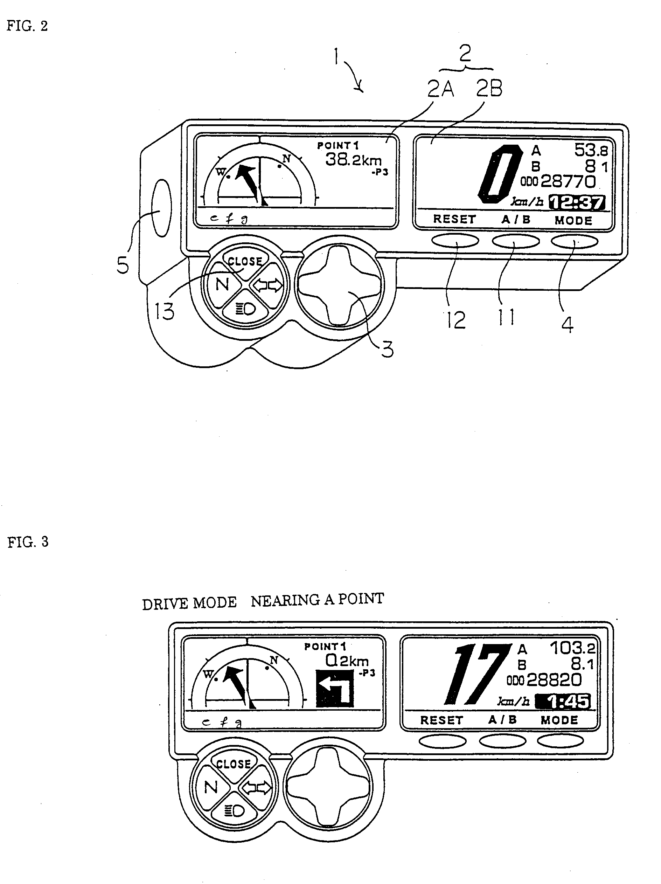

FIG. 2 shows the main portion of the display device for use in the system described above. In this embodiment, the main part 1 of the device is made integral with a liquid crystal display type of meter disposed near the center of motorcycle handlebars. A display screen 2 of the main part 1 of the device comprises a meter display section (display screen 2B) and a navigation display section (display screen 2A) of approximately the same size with each other, arranged closely side by side, the former for displaying vehicle speed (speedometer), traveled distance (odometer and trip meter), and time (digital clock), and the latter for displaying the current point and the distance and direction to the destination (a next point on the route).

The main part 1 of the device is provided with a data input key 3 for the rider to input data of the points on the route directly and manually to the main part 1, and with a mode switching button 4 for switching the display modes on the display screen 2, both arranged on the periphery of the display screen 2 of the main part 1 of the device. An infrared input-output window 5 is provided on a side of the main part 1 of the device so that data may be inputted from a separate device such as a simplified remote control or a personal computer by infrared communication and that information stored in a RAM is outputted by infrared communication.

As shown in FIG. 1, a vehicle speed sensor and a geomagnetic sensor disposed at appropriate positions on the vehicle are connected to the main part 1 of the device. A GPS antenna for receiving electromagnetic waves from a satellite in GPS is also connected to a GPS receiver in the main part 1 of the device (for detecting longitude and latitude of the current point from the electromagnetic waves received from the satellite). With the above arrangement, the vehicle speed detected with the vehicle speed sensor, the vehicle direction detected with the geomagnetic sensor, and the current vehicle position detected with the GPS receiver are respectively inputted as route guidance information to the CPU of the main part 1 of the device.

Furthermore, following components are respectively connected to the main part 1 of the device: a button 6 for switching the points on the route and a memory button 7 as means for manually sending signals to the CPU in the main part 1 of the device according to the intention of the rider, a neutral switch and a side stand switch as means for automatically sending signals of the standing state of the vehicle to the CPU in the main part 1 of the device, and a transmitting section 8 as warning means for giving a warning by vibration to the rider. As shown in FIG. 2, a close lamp 13 flashing at the time of warning as one of different display lamps is provided on the top side of the main part 1 of the device.

Prior to using the display device including the navigation device, when a route is set using an atlas or the like, appropriate diverging points on the route are set as different points on the route and data for the points on the route are registered in the RAM in the main part 1 of the device. In that case in this embodiment, data for each point (diverging point) on the route are inputted (numerically) in longitude and latitude, and at the same time, the driving direction at each point on the route is also inputted in absolute azimuth (octant) (using an arrow). The data are registered as a table arranged in the order of points on the route.

While the data may be inputted directly through the data input key 3, in this embodiment, a table of data for the points on the route is prepared in advance using a personal computer and map software for the personal computer, and the table is stored in the RAM of the main part 1 of the device by transferring the table as a whole (batch) by infrared communication through an infrared input-output window 5 opened on the main part 1 of the device.

As to the method of data input by batch transfer using a personal computer, owing to widespread use of high performance personal computers and availability of many map softwares for personal computers of late make it possible to arrange transferable data table using the map software for personal computers and register the table in a batch. This makes it possible to control the data with the personal computer, simplify the registration work which is otherwise complicated, and for the user to create his or her own data library according to the user's taste on the route consisting of data of points on the route.

As for the map software for the personal computer, any software may be used in which direction of every road extending from each diverging point is registered with an arrow of absolute azimuth in octant in addition to the longitude and latitude. Using such software, a data table for each point on the route may be easily created by simply selecting and clicking a direction arrow showing the route at the diverging point on the route. Furthermore, remaining arrows which have not been selected may be registered as reference information (different road directions at every diverging point) in a data table for the points on the route.

With the display device of this embodiment in which the main part 1 of the device is mounted on the motorcycle, if the connector section of the main part 1 is of a contact type using cables, such a section is likely to be affected with water and dust. Use of infrared communication through the infrared input-output window 5 requires no contact and eliminates such a concern.

The method of inputting the data of the points on the route into the main part 1 of the device is not limited to the batch transfer input using a personal computer. The input may also be performed with a simplified remote control by infrared communication, or with an overview table of data for the points on the route created in advance on the display screen 2 of the main part 1 of the device by operating the data input key 3 and directly inputted.

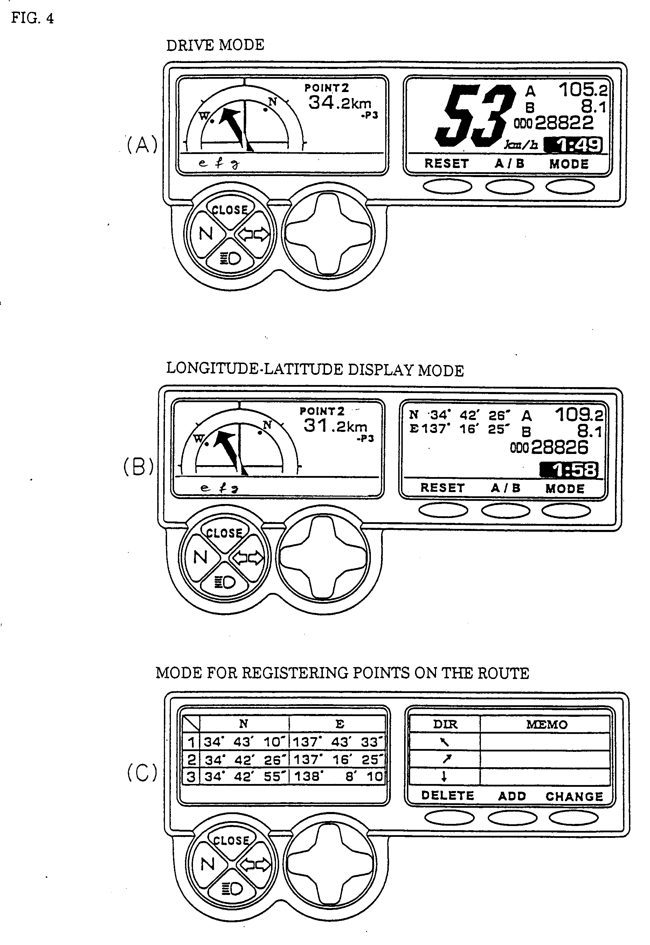

That is to say, in the case the data for the points on the route are directly inputted using the data input key 3, the display on the display screen 2 of the main part 1 of the device is switched using a mode switching button 4 to the mode for registering the points on the route as shown in FIG. 4 (C) (the screen for displaying the table of data for the points on the route), the longitude and latitude of each point on the route and the driving direction in absolute azimuth at each point on the route are inputted on the screen in the mode for registering the points on the route to create the table of data of the points on the route, and the table is stored in the RAM in the main part 1 of the device.

When the mode switching button 4 is pressed, the display on the display screen 2 is switched to a drive mode, the longitude and latitude display mode, or the mode for registering the points on the route as shown in FIGs. 4(A) - 4(C). When the vehicle is driven, the display screen 2 is automatically switched to the drive mode. However, when the vehicle comes to a stop, the display screen 2 may be manually switched to the longitude and latitude display mode or the mode for registering the points on the route.

The display screen 2 of the navigation device which may be switched as described above comprises in this embodiment a first display section 2A for navigation and a second display section 2B for the meters arranged closely side by side. These sections are formed by separate screens.

In the drive mode display as shown in FIG. 4(A), the display screen 2A shows the current point and the distance and direction to the next point on the route, and the display screen 2B shows the vehicle speed (as speedometer), the traveled distance (as odometer and twin trip meters), and time (as digital clock).

In the longitude and latitude display mode, navigation information including the current point and distance and direction to the next point on the route is displayed on the display screen 2A, while the display screen 2B, switched from the vehicle speed display, displays navigation information including the longitude and latitude of the current point. In the mode for registering the point on the route, out of the input contents in the table, the longitude and latitude are shown in the screen 2A, and the absolute azimuth and a memo box are displayed in the display screen 2B.

Since the longitude and latitude data need not be displayed on the display screen 2B except for searching the current point on the map, the display may be arranged to be automatically switched to the longitude and latitude display mode only when the vehicle is standing, instead of arranging to be manually switched with the switching button 4 when the vehicle is standing. As to the display design, while the vehicle speed is not shown in the longitude and latitude display mode shown in FIG. 4(B), the vehicle speed may be displayed in a small size so that a space thus produced may be used to display the longitude and latitude.

By the way in this embodiment, in the longitude and latitude display mode showing the navigation information on both display screens 2A, 2B, more important information or the distance and direction to the next point on the route (and turning direction of the vehicle) are displayed on the screen 2A for navigation, while less important information or the longitude and latitude of the current point are displayed on the meter display screen 2B for meters.

As to the display in the mode for registering the point on the route, from the viewpoint of safety, as will be described later (in the description of functions of change, deletion, and addition of data for the points on the route), the display is arranged that it cannot be switched to the mode for registering the points on the route even if the mode switching button is operated while the vehicle is standing unless predetermined conditions are met. Furthermore, it is arranged that even if the display is in the mode for registering the points on the route, once the vehicle starts moving, it is automatically, immediately switched to the drive mode.

Now the operation of the navigation device with the data table for the points on the route registered in the RAM in the main part 1 of the device as described above will be described. While a motorcycle is heading for a destination (a next point on the route), the longitude and latitude of the current point are constantly detected as the GPS receiver receives the electromagnetic waves from the satellite of the GPS and inputted to the main part 1 of the device. A specified calculating operation is performed in the CPU in the main part 1 of the device using the detected data for the current point and the data for the points on the route stored in the RAM according to the program stored in the ROM, and the results are displayed on the display screen 2.

While the vehicle is running, the display screen 2 of the main part 1 of the device is in the drive mode as shown in FIG. 2 or FIG. 4(A), and if the vehicle is running at a point distant from the next point, the place name near the current point is displayed according to the place name data stored in the ROM along with the distance and direction to the next point.

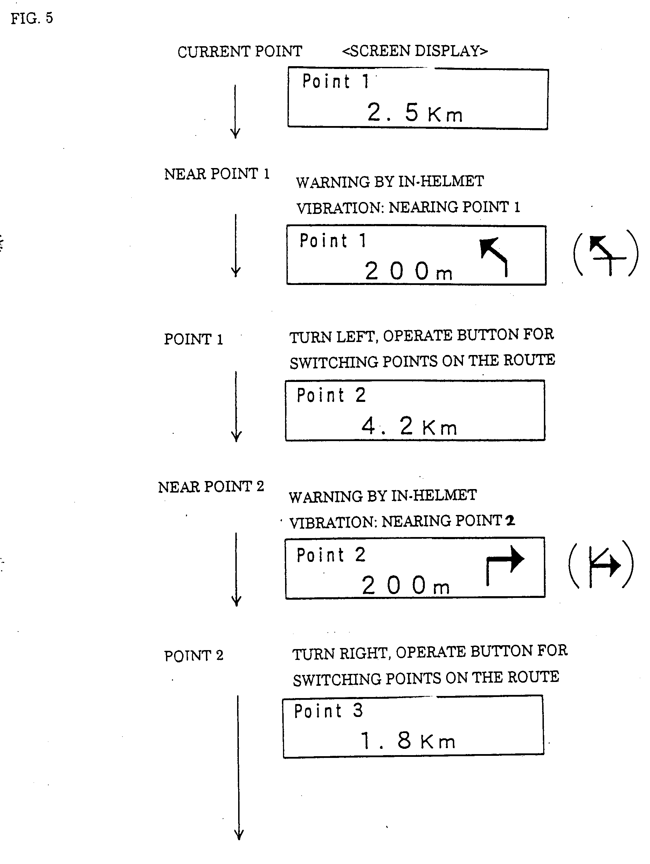

When the vehicle approaches the next point on the route, the vehicle direction at that time point is detected with the geomagnetic sensor and compared with the driving direction. If the vehicle direction is different from the driving direction, the previously inputted absolute azimuth of the driving direction of the next point on the route is corrected, the turning direction of the vehicle at the next point on the route is determined, and as shown in FIGs. 3 and 5, an arrow for instructing the turning direction of the vehicle at the next point on the route is automatically displayed on the display screen 2A.

As shown in FIG. 3 and FIGs. 4(A) and 4(B),in the drive mode and the longitude and latitude display mode, the place name near the current point and the distance and direction to the next point on the route are constantly displayed on the display screen 2A. In FIG. 5, however, only the distance to the next point on the route and the turning direction of the vehicle are displayed, and other information is omitted.

In other words, in the drive mode while the vehicle is running but distant from the next point on the route, only the place name near the current point and the distance and direction to the next point on the route are displayed on the display screen 2A. When the vehicle approaches the next point on the route, the turning direction of the vehicle is additionally displayed on the display screen 2A, and the close lamp flashes to visually draw the rider's attention. Therefore, the rider is guided to turn and drive along the preset route according to the indicated turning direction at the next point on the route.

With this embodiment in particular, the data at the point on the route are those that have been inputted using the driving direction in absolute azimuth at the point on the route, and the turning direction of the vehicle is determined by correcting the data in absolute azimuth using the actual vehicle direction (data detected with the geomagnetic sensor) at the time of the vehicle coming to the point on the route. Therefore, even if there are a plural number of approaching routes from different directions to the point on the route, or even if the vehicle passes the point while the rider overlooks and turns back, a correct turning direction as seen from the rider is always displayed irrespective of the approaching route to the point on the route.

Furthermore, as al ready described, if a map software in which directions of roads diverging from a point on the route are all registered with octant absolute azimuth arrows is used, and the directions of other roads at the point on the route are registered as reference information in the data table using arrows when the turning direction of the vehicle is displayed, the diverging state of other roads may also be displayed in parentheses as shown on the right margin of FIG. 5 relative to the turning direction of the vehicle.

As described above, while the turning direction of the vehicle is displayed when the vehicle approaches a diverging point (a point on the route) for which route guidance is required, a motorcycle rider cannot stare the display screen during driving, and therefore the rider might overlook the guidance if it is given by the display only. Therefore, the rider's attention has to be called by some warning other than the display screen.

For that purpose, with this embodiment, when the vehicle approaches a point on the route, not only that the close lamp 13 is caused to flash but that the rider is caused to recognize that the vehicle is approaching the diverging point (point on the route) by bodily sensation using vibration of a vibrating body provided in the crash helmet. A voice guidance as used in the automobile navigation device cannot be audible because of the wind noise especially at high speeds.

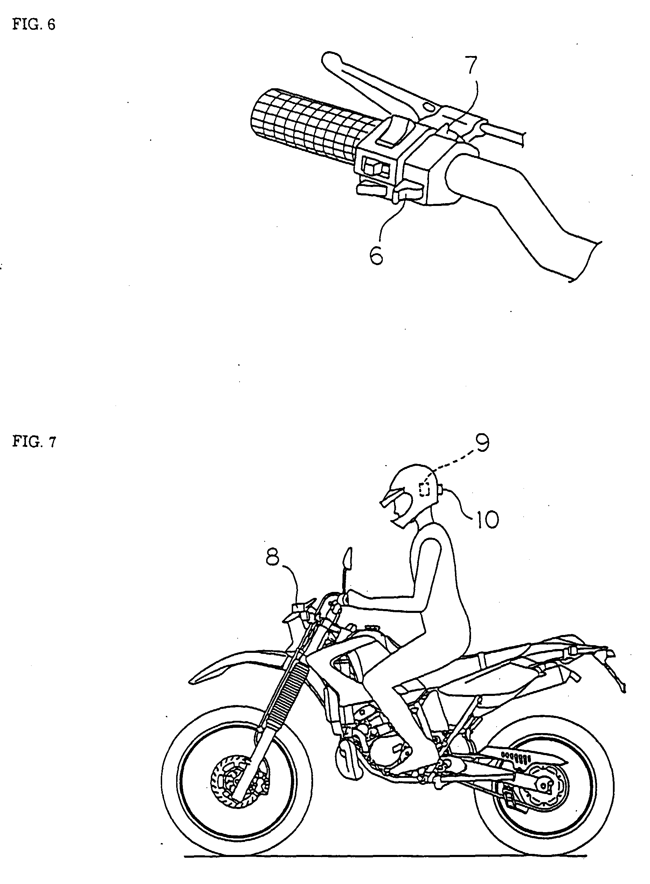

With a warning means shown in FIG. 7, electromagnetic waves are emitted from the transmitting section 8 according to a signal outputted from the main part 1 of the device indicating that the vehicle is approaching a point on the route and perform wireless control of a vibrating body 9 disposed in the crash helmet through a receiver section 10 mounted on the crash helmet surface. In this way, when the vehicle approaches the diverging point (point on the route) for which route guidance is required, the vibration of the vibrating body prompts the rider to watch the display screen 2A. The timing of starting a warning is controlled to vary according to the vehicle speed.

The warning means may be used not only to call attention to the display screen as described above but also to cause the rider to discern the difference in the warning vibration by changing the vibration frequency, or to inform the rider of a turning direction by causing one of two vibrating bodies disposed on right and left sides to vibrate. Also, high frequency sound waves or tight beams may be used to provide audio or visual warning in place of warning with the vibrating body.

The rider prompted by the warning described above watches the display screen 2A and drives the vehicle to the turning direction indicated with the arrow, and after passing a point on the route, the vehicle heads for the next point on the route. At that time in this embodiment, the route guidance is not automatically switched for the next point (one point ahead of the point just passed). Instead, the rider, after confirming that the vehicle has passed the point on the route, presses a button 6 for switching the point on the route to switch the route guidance for the next point on the route.

When the button 6 for switching the points on the route is manually operated as described above, the display of the vehicle turning direction goes out and the display screen 2A shows again the place name near the current point and the distance and direction to the next point on the route as shown in FIG. 4(A).

The button 6 for switching the points on the route for the rider to manually operate at the rider's own will is disposed as shown in FIG. 6 in the vicinity of a handlebar grip (in a handlebar switch section) so as to be operated without the rider releasing the handlebar. As long as the data table for the points on the route is organized in the order of the points on the route and registered in advance, the route guidance for the next point on the route may be started by pressing the button 6 for switching the points on the route after passing the current point on the route.

There is a navigation device for automobiles in which the data table for the points on the route for switching the route guidance is stored in a memory. To select the next point after reaching the current point on the route using such a device, it is necessary to reset.

In contrast to the manual switching to the next point on the route as described above, automatic switching at the time of the vehicle passing the current point according to the order of the data table for the points on the route is also conceivable. However, this may cause the following problems for example: In the case of an intentional detour around a point on the route, the route guidance thereafter becomes inoperative. The driver may overlook when the vehicle passes a current point on the route. (In the case of manual switching, the direction indicating arrow turns to the opposite direction upon the vehicle passing the current point, which will be immediately noticed by the driver.) In the case the driver inadvertently passes and turns back to the current point, the route guidance to the next point may have already started and the route guidance for the current point may not be provided.

The navigation device of the display device according to this embodiment is adapted so that the pre-registered data for the points on the route may be changed, deleted, or added in the middle of the preset route when the vehicle is standing.

That is to say, similarly to the direct input and registration of the data, the mode switching button 4 may be used to switch the display screen 2 from the drive mode or the longitude and latitude display mode to the mode for registering the point on the route as shown in FIG. 4(C) in which the table of input contents for the points on the route is displayed. In that state, the displayed data for the points on the route may be changed, deleted, or added, and then registered again in the RAM of the main part 1 of the device.

As shown in FIG. 2, in this embodiment, the trip meter is of a twin type which may be switched to display A or display B with a switch. A mode switching button 4, an A-B switching button 11 for the trip meter, and a reset button 12 are disposed side by side. As shown in FIG. 4(C), when the display screen 2 is switched to the registration mode for the points on the route using the mode switching button 4, the mode switching button 4, the A-B switching button 11, and the reset button 12 are used as operation buttons for changing, adding, and deleting the data shown in the data table for the points on the route.

However, since the driver should not remove a hand from the handlebar for changing, adding, and deleting the data for the points on the route while the vehicle is running, in this embodiment, such operations are made impossible as a matter of course, and moreover, even when the vehicle is standing, it is still impossible to switch to the registration mode for the points on the route unless certain conditions are met. Furthermore, it is arranged that the registration mode for the points on the route is immediately, automatically switched to the drive mode once the vehicle starts running.

The conditions to be met simultaneously to enable switching to the registration mode for the points on the route may be three or four in number for example; the vehicle speed being at 0 km/h, the transmission being in the neutral gear (as detected with a neutral switch), and the mode switching button being on; or further the side stand being on (as detected with a side stand switch).

The navigation device of this embodiment is also adapted to permit registration of points on the route the rider wants to remember (sightseeing spots and diverging roads) with a simple procedure even in the middle of running.

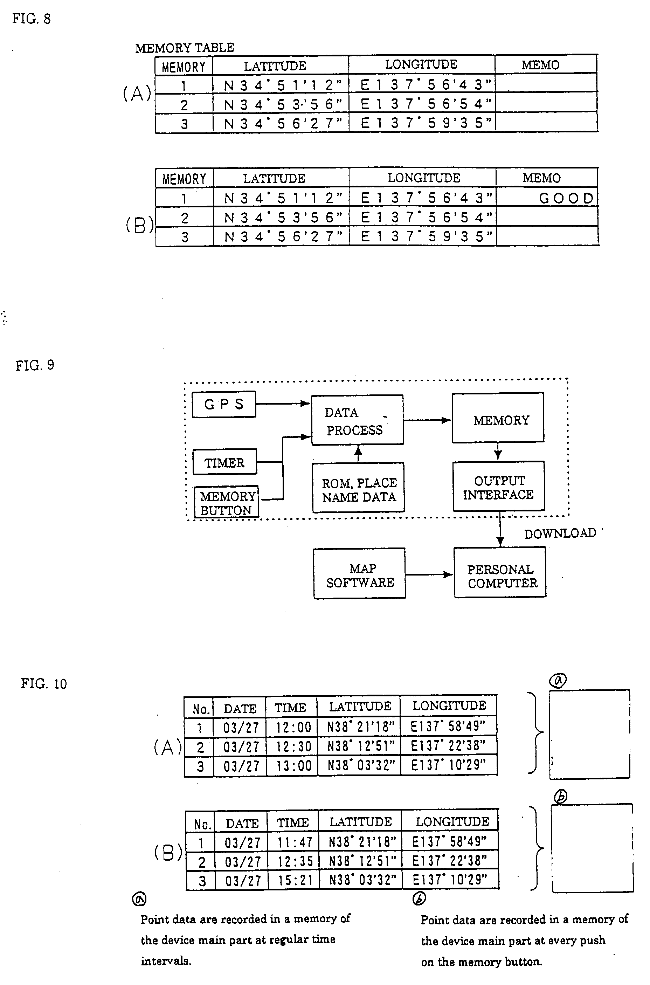

That is to say, as shown in FIG. 6, in the vicinity of the handlebar grip (handlebar switch) of the vehicle, along with the switch 6 for switching the points on the route, a memory button 7 is provided which may be pressed by the driver without removing a hand from the handlebar grip even during driving. When the rider presses the memory button 7, the data of a point the rider wants to remember (sightseeing spot, diverging road, etc.) in longitude and latitude are inputted and stored as the data table (longitude and latitude table) as shown in FIG. 8(A) for example in the RAM of the main part 1 of the device.

With this embodiment having the place name data stored in the ROM, the place names of the points on the route are automatically registered in the memo box of the stored data table simultaneously with the operation described above as shown in FIG. 8(A). The contents in the memo box may be changed later by the user as shown in FIG. 8(B) for example.

Some of the navigation devices for automobiles have a system which permits registration of routes in the current point registration mode. However, with such a system, operation of the display screen is complicated and therefore registration during driving is difficult. On the other hand, with this embodiment, the longitude and latitude of the current point may be easily registered in the memory with a single hand operation on the memory button 7 at the point the driver wants to remember during driving.

The navigation device of the display device according to this embodiment may also use the system as shown in FIG. 9 to store the running route in a simplified manner in a memory and later to read the stored data so that the running route may be determined or displayed. Furthermore, average traveling speed may also be calculated later for example by interlocking with a digital clock and simultaneously recording the time.

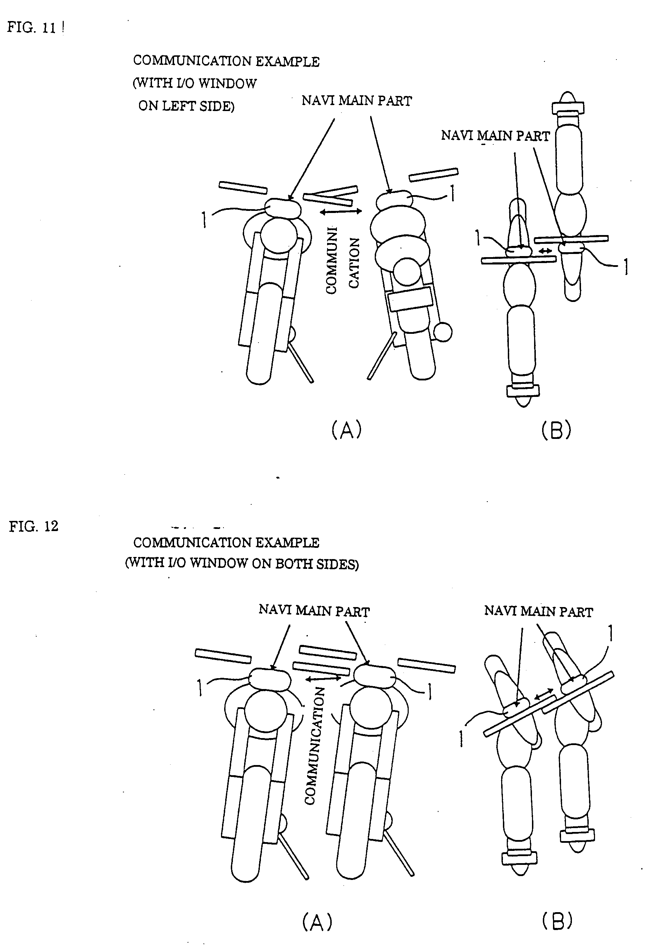

That is to say, in the case the map data (CD-ROM) showing the actually passed points on the map are not used and more than one roads are present between points on the route, it is impossible to determine later which of the roads the vehicle actually followed. With this embodiment, however, using the system shown in FIG. 9 for example, the longitude and latitude of the points on the route may be periodically stored in the memory with the time stamp using a timer at the points passed as shown FIG. 10(A). Or as shown in FIG. 10(B), the longitude and latitude data may be stored in the memory by pressing the memory button 7 at every diverging point on the route (this saves memory space in comparison with the periodical storage using the timer) and later the traveled route may be determined by displaying the stored data and referring to an atlas (carrying longitudes and latitudes), or the stored data may by downloaded to a personal computer and linked to a map software to display the traveled route.

Even in the case the route is not set in advance and the vehicle is freely driven, if the data are stored in the memory as described above, the traveled route may be later determined or displayed, and the average traveling speed may be calculated.

The navigation device is also adapted so that the data in the memory registered or collected in the main part 1 of the device by the use of the memory button 7 may be outputted by infrared communication through the infrared input-output window 5 and that the stored data and data for the points on the route may be downloaded, in addition to inputting data for the points on the route for registration.

In other words, this embodiment is adapted so that data may be exchanged between the main part 1 of the device and an auxiliary input device (such as a personal computer) or between the main part 1 and another main part 1 of the device. In particular as shown in FIG. 2, the infrared input-output window 5 for infrared communication is provided on the side surface of the main part 1 of the device, and directed laterally relative to the advancing direction of the vehicle so that communication between vehicles may he made when they stand side by side.

When data are exchanged between two vehicles, the distance between the meter sections of the vehicles may be shortened by bringing the vehicles close to each other in parallel, opposite directions as shown in FIG. 11(B) so that infrared output may be effectively utilized. In that case, the infrared input-output window is preferably provided on the left side of the main part 1 of the device so that the riders need not support the standing vehicles because of the side stand position as shown in FIG. 11(A) and the standing side of the rider. Alternatively, if the infrared input-output windows are provided on both right and left sides, the communication may be made by letting two vehicles stand respectively on the side stands side by side as shown in FIGs. 12(A) and 12(B).

With the screen display of this embodiment, the navigation information is displayed using not only the display section 2A for navigation but also the display section 2B for meters originally mounted on the vehicle. As a result, the size of the display screen 2A for navigation may be made smaller, saving the mounting space for the navigation device on the vehicle so that the navigation device may be mounted not only on automobiles but also on vehicles, having less mounting space, such as motorcycles.

With this embodiment, when the display screen 2 is switched to the longitude and latitude display mode, navigation information of a higher priority namely the distance and direction to the next point on the route is displayed on the display screen 2A for navigation while navigation information of a lower priority namely the longitude and latitude of a current point is displayed on the display screen 2B. Therefore, not that the navigation information of a higher priority is displayed in a small, limited space on the display screen 2B containing the meter display, but that displayed in a state easy to see.

This embodiment is adapted for safety that the display screen 2 is always set to the drive mode whenever the vehicle is on the move and that when the vehicle is standing the screen 2 may be switched to other modes. Furthermore, as to the mode for registering the points on the route, it is adapted for greater safety to permit setting to the mode only when the vehicle is standing and further when certain conditions are met, for example by determining that a stand of the motorcycle has been put down.

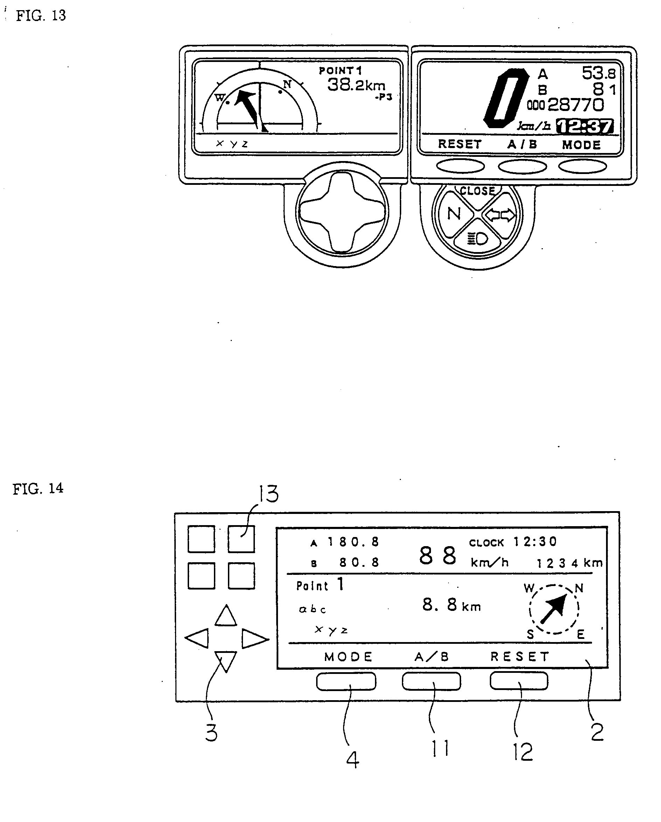

The above embodiment is not limited to the display device of the specific constitution as described above but also may be embodied as shown in FIG. 13 for example with an additional, separate navigation device to a standard specification speedometer (however, when the meter only is used, the close lamp is a dummy and actually inoperative) so that the meter display screen may be used in the longitude and latitude display mode and the mode for registering the points on the road when the navigation device is separate from the meter.

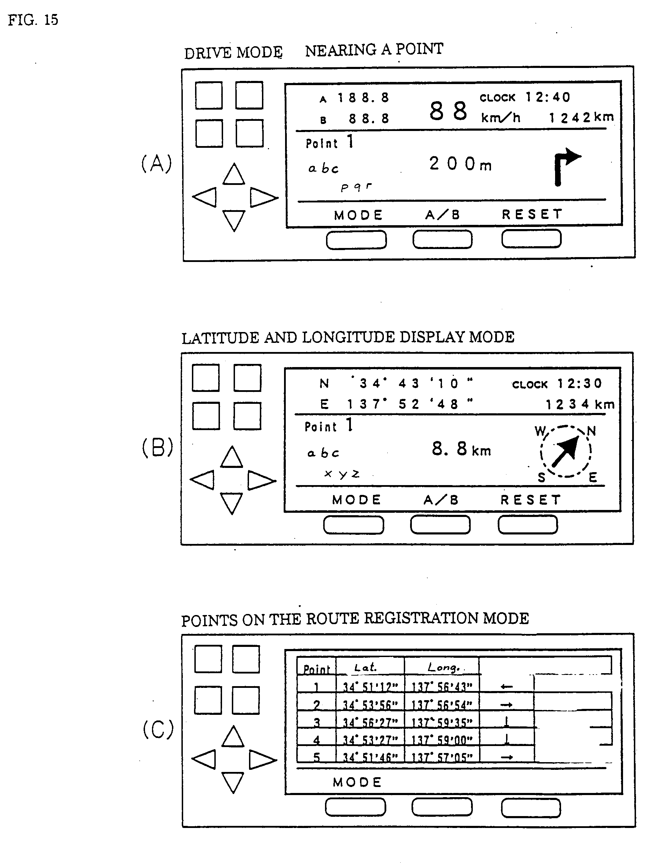

As shown in FIG. 14, it is possible not only to unite the navigation device and the meter in a display device, but also to unite the display section for navigation and the display section for the meters into a single display screen 2. In that case for example, when the vehicle approaches a next point on the route, the display of the direction to the point on the route is switched to the display of the turning direction of the vehicle as shown in FIG. 15(A), the longitude and latitude display mode is displayed as shown in FIG. 15(B), or the mode for registering the points on the route is displayed as shown in FIG. 15(C).

It is a matter of course that the display device with the navigation device of the invention is applicable not only to the navigation devices for motorcycles but also to the navigation devices for automobiles.

With the display device as described above, navigation information may be displayed not only on the display section for navigation but also on the display section for meters. This reduces the size of the display screen and saves the mounting space for the navigation device and makes it possible to effectively mount the navigation device to vehicles having a limited mounting space as motorcycles.

## Claims

1. Display device for a vehicle, preferably a motorcycle, comprising
a first display section (2A) for navigation for displaying a route guidance along a predetermined route based on previously input data for different points on the route and detected data for a current point representing the actual position of the vehicle,
a second display section (2B) for meters including a meter for the vehicle speed, wherein said first and second display section (2A,2B) are arranged close to each other.

2. Display device according to claim 1, **characterized in that** means are provided for partially or entirely switching the second display section for the meters (2B) to display navigation information.

3. Display device according to claim 1 or 2, **characterized in that** navigation information of higher importance is displayed on the first display section (2A), whereas navigation information of lower importance is displayed on the second display section (2B).

4. Display device according to one of claims 1 to 3, **characterized in that** the display device is adapted to be switched to a plurality of display modes (A,B,C) including a mode (C) for registering the points of a preselected route, said display device comprising means for activating said mode (C) only when a standstill position of the vehicle and a further condition confirming said standstill position is determined.

5. Display device according to one of claims 1 to 4, **characterized in that** the display device is adapted to be switched to a drive mode (A), wherein the first screen (2A) displays the current point and distance and direction to the next point on the preselected route, and the second screen (2B) displays at least the vehicle speed, said display device further comprising means for automatically switching it to the drive mode (A) when the vehicle is started.

6. Display device according to one of claims 1 to 5, **characterized in that** said display device comprises means for activating a "turning direction" signal on the first display when the vehicle is close to a preselected point.

7. Display device according to one of claims 1 to 6, **characterized in that** a separate warning means is provided for calling the drivers attention when approaching a preselected point.

8. Display device according to one of claims 1 to 7, **characterized in that** the display sections (2A,2B) are mounted on a common housing (3) aside each other.

9. Display device according to one of claims 1 to 7, **characterized in that** the display sections (2A,2B) are integrated in a single display screen (2).
